# EUROPEAN PATENT SPECIFICATION

(11) **EP 3 855 020 B1**
(45) Date of publication and mention of the grant of the patent: **05.03.2025**
(21) Application number: 21152184.4
(22) Date of filing: 18.01.2021
(51) Int. Cl.: F16L 41/03, F04B 53/16

(54) **MANIFOLD FOR AN ELECTRIC PUMP AND ELECTRIC PUMP WITH SUCH MANIFOLD**
VERTEILER FÜR EINE ELEKTRISCHE PUMPE UND ELEKTRISCHE PUMPE MIT EINEM SOLCHEN VERTEILER
DISTRIBUTEUR POUR UNE POMPE ÉLECTRIQUE ET POMPE ÉLECTRIQUE AVEC UN TEL DISTRIBUTEUR

(30) Priority: 27.01.2020 IT 202000001468
(43) Date of publication of application: 28.07.2021
(73) Proprietor: Dab Pumps S.p.A., 35035 Mestrino (Padova) (IT)
(72) Inventor: SINICO, Francesco, 36075 MONTECCHIO MAGGIORE VI (IT); CAILOTTO, Pietro, 36070 TRISSINO VI (IT); CAPPOCCHIN, Michele, 35035 MESTRINO PD (IT)
(74) Representative: Tiburzi, Andrea

(56) References cited:
- EP-A1- 1 482 249
- WO-A1-2014/131380
- IT-A1- VI20 090 157
- IT-A1- VI20 090 176
- NL-A- 8 002 207
- US-A1- 2015 007 796

## Description

The present invention relates to a manifold for an electric pump.

The invention also relates to an electric pump with such a manifold.

An electric pump is a device for moving a liquid, generally water, by drawing it from a first region, by means of a first duct of a hydraulic system, and transferring it to a second region, by means of a second duct of a hydraulic system.

The electric pump comprises:
- a mechanical section, which comprises a suction inlet and a discharge outlet, to which the suction and discharge ducts are connected, and contains one or more impellers, interleaved by diffusers and keyed on a driving shaft adapted to rotate them, for the movement of the liquid,
- an electromechanical section, comprising an electric motor for moving the driving shaft and an electronic board for controlling the electric motor.

Usually, the suction inlet and the discharge outlet are fluidically connected to respective ducts by means of manifolds.

These manifolds can be used both for individual electric pumps and for pumping assemblies composed of a series of electric pumps.

In the case of pumping assemblies, a single manifold is shared by multiple electric pumps and associated with the suction inlets/discharge outlets of each electric pump of the assembly.

These manifolds are substantially constituted by tubular elements, made of metallic material, usually stainless steel, connected to:
- the ducts of the hydraulic system,
- the suction inlet/discharge outlet of the electric pump.

These tubular elements comprise a tubular main body which has:
- at the two ends, a threaded portion for connection to the ducts of the system,
- at least one hole with an axis at right angles to the axis of extension of the tubular main body for fluidic connection to a suction inlet/discharge outlet of at least one electric pump.

Known manifolds are disclosed by the following documents: EP 1 482 249 A1, WO 2014/131380 A1 and IT VI20 090 176 A1.

These known manifolds have drawbacks.

Usually, in order to provide the threaded connecting portions, at the ends, externally and/or internally threaded bushings are welded to the ends of the tubular main body, so that they have the same axis of extension and protrude from it.

However, this creates manifolds with significant space occupations and a poor visual impact thereof.

Furthermore, at each hole for fluidic connection to the suction inlet/discharge outlet, the manifold has an annular portion, which comprises the seat for an O-ring, provided by welding a sleeve on the external surface of the tubular main body, around the hole.

Due to the welding process, however, deformations can occur which might jeopardize the seal.

Furthermore, it is necessary, during the production step, to have a considerable number of basic parts to be welded in order to provide the manifold: a tubular main body, two threaded bushings and at least one sleeve.

Another drawback that can be found in currently known manifolds resides in the fact that the tubular main bodies are provided by means of portions of standard commercially available pipes for hydraulics and have a wall with a minimum thickness on the order of 2.5 mm.

This leads to considerable weight and also considerable costs, resulting from the amount of raw material used for its production.

The aim of the present invention is to provide a manifold for an electric pump and an electric pump with such a manifold which are capable of improving the background art in one or more of the aspects mentioned above.

Within this aim, an object of the invention is to provide a manifold for an electric pump which has reduced space occupations with respect to similar manifolds of a known type and a more pleasant visual impact.

Another object of the invention is to devise a manifold for an electric pump that requires fewer basic parts for its provision with than similar manifolds of the known type.

Another object of the invention is to provide a manifold that is lighter and cheaper than similar manifolds of the known type.

A still further object of the invention is to provide an electric pump that comprises a manifold capable of achieving the aim and objects described above.

Another object of the present invention is to overcome the drawbacks of the background art in a manner that is alternative to any existing solutions.

Last but not least, it is an object of the invention to provide a manifold for an electric pump that is highly reliable, relatively easy to provide and has competitive costs.

This aim is achieved by a manifold as defined in claim 1 and a pump as defined in claim 13. Further characteristics and advantages will become

more apparent from the description of some preferred but not exclusive embodiments of a manifold for an electric pump, illustrated by way of non-limiting example in the accompanying drawings, wherein:
Figure 1 is a general perspective view of a manifold for an electric pump according to the invention in a first embodiment;
Figure 2 is a sectional view of the manifold of Figure 1;
Figure 3 is an enlarged-scale view of a first detail of the sectional view of Figure 2;
Figure 4 is an enlarged-scale view of a second detail of the sectional view of Figure 2;
Figure 5 is a general perspective view of a constructive variation of the manifold for an electric pump of Figure 1;
Figure 6 is a general perspective view of a manifold for an electric pump in a different embodiment;
Figure 7 is a sectional view of the manifold of Figure 6.

With reference to the figures, a manifold for an electric pump according to the invention, in a first embodiment thereof, is generally designated by the reference numeral 10.

The manifold 10 comprises:
- a tubular main body 11 having an axis of extension X,
- two tubular portions 12a, 12b, which are arranged at the longitudinal ends of the tubular main body 11, are coaxial therewith, and are adapted for connection to the ducts of a hydraulic system, not shown in the figures.

The tubular main body 11 has at least one hole 13 for fluidic connection to a corresponding suction inlet/discharge outlet of an electric pump, also not shown in the figures.

The hole 13 has an axis of extension Y that is at right angles to the axis of extension X of the body 11.

The manifold 10 is made of metallic material, preferably steel.

One of the particularities of the invention resides in the fact that the body 11 is provided by welding a previously calendered metal sheet onto the body 11, with the calendered metal sheet, and thus the wall of the body 11, having a thickness on the order of 1 mm.

The thickness of the basic calendered metal sheet, and therefore of the wall of the tubular main body 11, is substantially lower than 2 mm.

Such a thickness of the wall of the tubular body leads to a manifold 10 that is lighter and cheaper than similar manifolds of the known type.

This wall thickness of the tubular main body 11 would be not achievable by using the portions of standard hydraulic pipes currently commercially available.

Furthermore, the manifold 10, by comprising a smaller quantity of basic material than a similar manifold of the known type, makes it possible to provide a greater number of manifolds for an equal mass of the basic metal sheet.

The body 11 has an inside diameter on the order of 10 cm, while the tubular portions 12a, 12b have an inside diameter on the order of 5 cm.

Another of the particularities of the invention resides in the fact that the tubular portions 12a, 12b are substantially inside the tubular main body 11.

In particular, the tubular portions 12a, 12b have a thread 16 on their inner surface.

The thread 16 is provided by tapping.

Each tubular portion 12a, 12b is monolithic with the tubular main body 11 and is constituted by:
- a substantially disc-shaped first element 14,
- a tubular second element 15, which is provided internally with the thread 16.

The first element 14 has:
- an external circumference 17 which is substantially equal to the circumference of the transverse cross-section of the tubular main body 11,
- an internal circumference 18 which is substantially equal to the circumference of the transverse cross-section of the second element 15.

The expression "transverse cross-section", in the present description, is understood to mean a cross-section on a plane at right angles to the axis of extension X of the body 11.

The first element 14 is welded to one end of the tubular main body 11, substantially at its external circumference 17.

The first element 14 is welded to one end of the second element 15, substantially at its internal circumference 18.

It should be noted that the thread 16 is provided after the welding of the second element 15 to the first element 14 in order to prevent the thread 16 from being deformed during this welding step.

The tubular portions 12a, 12b of the manifold 10 are adapted for connection to the ducts of the hydraulic system inside the tubular main body 11 and this leads to smaller space occupations than similar manifolds of the known type and to a more pleasant visual impact.

The second element 15 is provided on its inside, between the end welded to the first element 14 and the thread 16, with a first annular seat 19 for the accommodation of a sealing element, such as an O-ring, not shown in the figures.

Another particularity of the invention resides in the fact that at the hole 13 for the fluidic connection to the corresponding discharge outlet/suction inlet of an electric pump there is a second annular seat 20 for accommodating a sealing element which is provided by drawing the edge of the hole 13 toward the inside of the tubular main body 11.

The sealing element is an O-ring, not shown in the figures.

The second seat 20 provided by drawing allows the use of a smaller number of basic parts for providing the manifold 10, since it is not necessary to weld a sleeve around the hole 13, as in manifolds of the known type.

Furthermore, the deformations resulting from welding a sleeve around the hole 13, which would lead to sealing problems, are avoided.

Moreover, since the body 11 has an inside diameter on the order of 10 cm, it is possible to provide a second seat 20 for accommodating a sealing element, and a hole 13 for fluidic connection to the corresponding discharge outlet/suction inlet, having a larger diameter than similar manifolds of the known type, obtaining lower load losses than said manifolds.

The manifold 10 has a shaped portion 21 on the wall of the tubular main body 11 in a portion that is opposite the one in which the hole 13 is arranged, considering the axis Y of extension of the latter.

The shaped portion 21 is adapted to interact with an appropriate complementary shape of the footing of an electric pump, not shown in the figures, in order to keep the manifold 10 in the position/configuration useful for the assembly and use of this electric pump.

Furthermore, the shaped portion 21 acts as an element for blocking the rotation of the manifold during the operation of the electric pump.

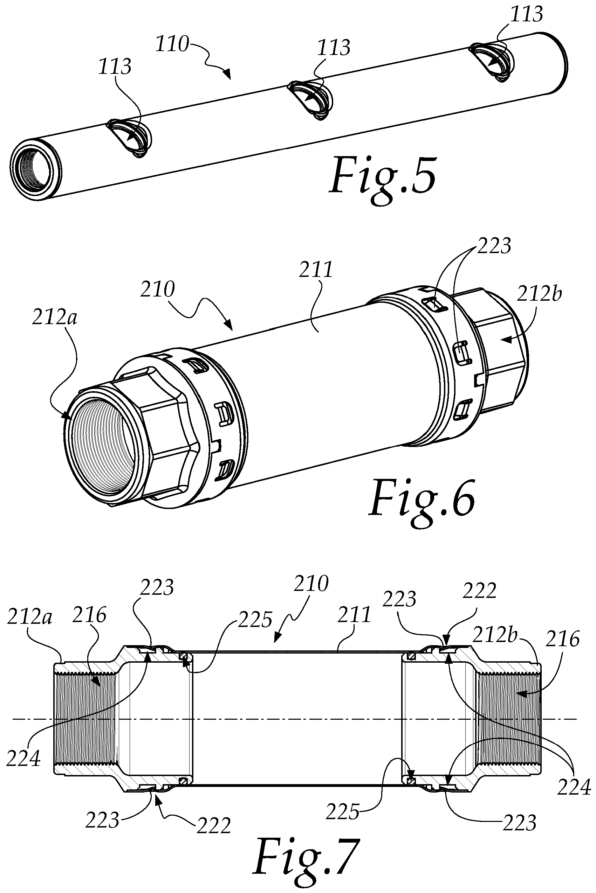

Figure 5 shows a manifold 110 according to the invention in a different embodiment.

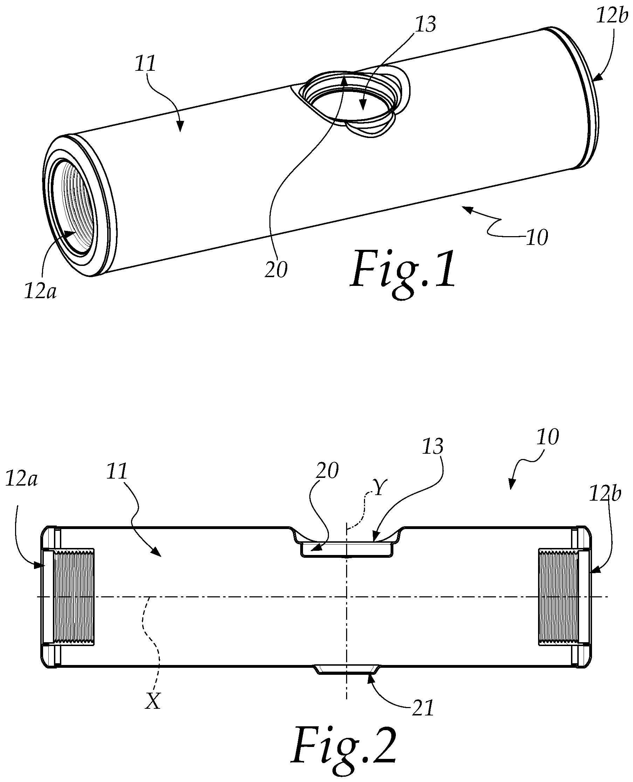

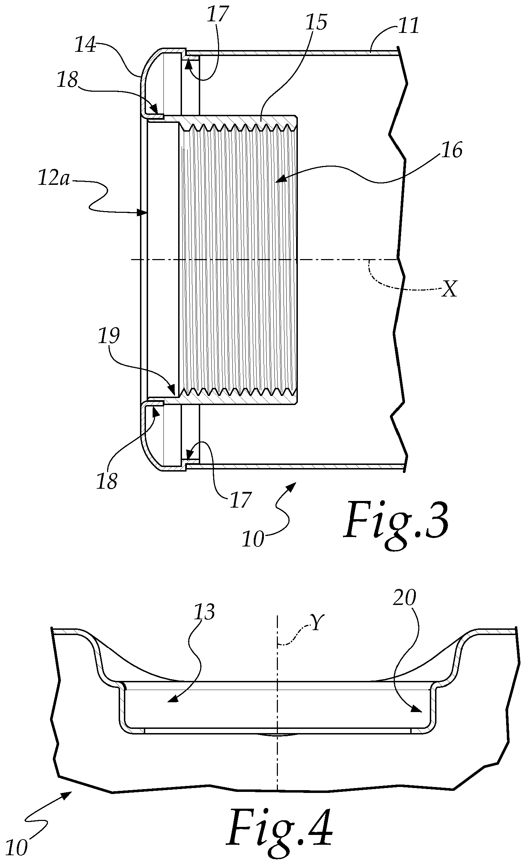

The manifold 110 is similar to the manifold shown in Figures 1 to 4 and described previously, but has a plurality of holes 113, each for fluidic connection to a corresponding discharge outlet/suction inlet of an electric pump, not shown in the figures.

The manifold 110 is therefore usable in pumping assemblies comprising multiple electric pumps.

The manifold 110 can also act as a structural element for pumping assemblies comprising multiple electric pumps, by crossing and being associated with the footing of each one of them.

Figures 6 and 7 show a manifold 210 according to the invention in a further embodiment.

The manifold 210 comprises:
- a tubular main body 211,
- two tubular portions 212a, 212b, arranged at the longitudinal ends of the tubular main body 211 and coaxial therewith, adapted for connection to the ducts of a hydraulic system, not shown in the figures.

The tubular main body 211 has at least one hole, not shown in the figures, for fluidic connection to a corresponding suction inlet/discharge outlet of an electric pump, also not shown in the figures.

The hole for fluidic connection to a corresponding discharge outlet/suction inlet has an axis of extension at right angles to the axis of extension of the tubular body 211 and is very similar to the one of the embodiments illustrated above.

In this embodiment also, the tubular body 211 is provided like the tubular main body of the manifolds described previously.

The tubular portions 212a, 212b are partially inserted in the body 211 but protrude from it.

In particular, the tubular portions 212a, 212b have a thread 216 on the surface that is internal thereto.

The thread 216 is provided during the step for molding the part by means of a convenient complementarily threaded insert.

The tubular portions 212a and 212b are made of plastic material and are associated with the body 211 by virtue of mutual interlocking means 222.

The mutual interlocking means 222 comprise:
- tabs 223 of the tubular body 211, which are arranged proximately to a corresponding end of the latter and are substantially equidistant along the circumference of a transverse cross-section of the body 211,
- one or more regions 224 of a corresponding tubular portion 212a and 212b, for abutment/interference with one or more corresponding tabs 223.

In particular, the tabs 223 are bent toward the inside of the body 211.

The regions 224 are located in the part of the tubular portion 212a, 212b that is inserted in the tubular body 211.

Between the tubular body 211 and a corresponding tubular portion 212a, 212b there is a sealing element 225, of the O-ring type, so as to surround the tubular portion 212a, 212b proximately to its end that is further inside the tubular main body 211.

The manifold 210, which comprises a body 211 provided by means of a calendered and welded metal sheet and the tubular portions 212a, 212b made of plastic material, is lower in cost than similar manifolds of the known type.

Furthermore, the tubular portions 212 are coupled by snap action to the tubular main body 211, leading to a quick and easy provision of the manifold 210 and without the need for a welding as in the previously described versions.

In practice it has been found that the invention achieves the intended aim and objects, providing a manifold for an electric pump which has reduced space occupations with respect to similar manifolds of the known type and a more pleasant visual impact.

The invention provides a manifold for an electric pump that requires fewer basic parts for its provision with respect to similar manifolds of the known type.

Moreover, the invention provides a manifold that is lighter and cheaper than similar manifolds of the known type.

Finally, the invention provides an electric pump which comprises a manifold capable of achieving the aim and objects listed above.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A manifold (10, 110, 210) for connecting an electric pumping assembly, comprising:
- a tubular main body (11, 211), said tubular main body (11, 211) having at least one hole (13, 113) with an axis of extension (Y) that is perpendicular to the axis of extension (X) of said tubular main body (11, 211),
- two tubular portions (12a, 12b, 212a, 212b) arranged at the longitudinal ends of said tubular main body (11, 211) and coaxial therewith,
wherein said tubular main body (11, 211) has a wall with a thickness on the order of 1 mm, **characterized in that** at said at least one hole (13, 113) there is a second seat (20) for accommodating a sealing element, which is provided by drawing the edge of said at least one hole (13, 113) toward the inside of said tubular main body (11).

2. The manifold (10, 110, 210) according to the preceding claim, **characterized in that** said tubular main body (11, 211) is provided by welding onto the main body a previously calendered metal sheet.

3. The manifold (10, 110, 210) according to one or more of the preceding claims, **characterized in that** said tubular main body (11, 211) has an inside diameter on the order of 10 cm and said tubular portions (12a, 12b, 212a, 212b) have an inside diameter on the order of 5 cm.

4. The manifold (10, 110) according to one or more of the preceding claims, **characterized in that** said tubular portions (12a, 12b) are substantially inside said tubular main body (11).

5. The manifold (10, 110) according to one or more of the preceding claims, **characterized in that** said tubular portions (12a, 12b) have a thread (16) on the surface that is internal thereto.

6. The manifold (10, 110) according to claim 5, **characterized in that** each one of said tubular portions (12a, 12b) is monolithic with said tubular main body (11) and is constituted by:
- a substantially disc-shaped first element (14),
- a tubular second element (15), which is provided internally with said thread (16),
said first element (14) having:
- an external circumference (17) which is substantially equal to the circumference of the transverse cross-section of said tubular main body (11),
- an internal circumference (18) which is substantially equal to the circumference of the transverse cross-section of said second element (15).

7. The manifold (10, 110) according to claim 6, **characterized in that** said first element (14) is welded:
- to one end of said tubular main body (11), substantially at said external circumference (17),
- to one end of said second element (15), substantially at said internal circumference (18).

8. The manifold (10, 110) according to claim 6 or 7, **characterized in that** said second element (15) is provided internally, between the end welded to said first element (14) and said thread (16), with a first seat (19) for the accommodation of a sealing element.

9. The manifold (10) according to one or more of the preceding claims, **characterized in that** it is provided with a shaped portion (21) on the wall of said tubular main body (11) in a portion that is opposite the one in which said at least one hole (13) is arranged, considering said axis (Y) of extension of said at least one hole (13).

10. The manifold (210) according to one or more of the preceding claims, **characterized in that** said tubular portions (212a, 212b) are partially inserted in said tubular main body (211) but protrude from it, said tubular portions (212a, 212b) having a thread (216) on the surface that is internal thereto.

11. The manifold (210) according to one or more of the preceding claims, **characterized in that** said tubular portions (212a, 212b) are made of plastic material and are associated with said tubular main body (211) by virtue of mutual interlocking means (222).

12. The manifold (210) according to claim 11, **characterized in that** said mutual interlocking means (222) comprise:
- tabs (223) of said tubular main body (211), arranged proximate to a corresponding end of the latter and substantially equidistant along the circumference of a transverse cross-section of said tubular main body (211),
- one or more regions (224) of a corresponding one of said tubular portions (212a, 212b), for abutment/interference with one or more corresponding tabs (223).

13. An electric pump, **characterized in that** it comprises a manifold (10, 110, 210) according to one or more of claims 1 to 12.

## Patentansprüche

1. Verteiler (10, 110, 210) zum Anschließen einer elektrischen Pumpenanordnung, umfassend:
- einen rohrförmigen Hauptkörper (11, 211), wobei der rohrförmige Hauptkörper (11, 211) mindestens ein Loch (13, 113) mit einer Erstreckungsachse (Y) aufweist, die senkrecht zur Erstreckungsachse (X) des rohrförmigen Hauptkörpers (11, 211) verläuft,
- zwei rohrförmige Abschnitte (12a, 12b, 212a, 212b), die an den Längsenden des rohrförmigen Hauptkörpers (11, 211) und koaxial zu diesem angeordnet sind, wobei der rohrförmige Hauptkörper (11, 211) eine Wand mit einer Dicke in der Größenordnung von 1 mm aufweist, **dadurch gekennzeichnet, dass** an dem mindestens einen Loch (13, 113) ein zweiter Sitz (20) zur Aufnahme eines Dichtungselements vorhanden ist, der durch Ziehen der Kante des mindestens eins Loches (13, 113) in Richtung der Innenseite des rohrförmigen Hauptkörpers (11) bereitgestellt wird.

2. Verteiler (10, 110, 210) nach dem vorhergehenden Anspruch, **dadurch gekennzeichnet, dass** der rohrförmige Hauptkörper (11, 211) durch Aufschweißen eines zuvor kalandrierten Blechs auf den Hauptkörper hergestellt wird.

3. Verteiler (10, 110, 210) nach einem oder mehreren der vorhergehenden Ansprüche, **dadurch gekennzeichnet, dass** der rohrförmige Hauptkörper (11, 211) einen Innendurchmesser in der Größenordnung von 10 cm hat und die rohrförmigen Teile (12a, 126, 212a, 212b) einen Innendurchmesser in der Größenordnung von 5 cm haben.

4. Verteiler (10, 110) nach einem oder mehreren der vorhergehenden Ansprüche, **dadurch gekennzeichnet, dass** die rohrförmigen Abschnitte (12a, 12b) im Wesentlichen innerhalb des rohrförmigen Hauptkörpers (11) liegen.

5. Verteiler (10, 110) nach einem oder mehreren der vorhergehenden Ansprüche, **dadurch gekennzeichnet, dass** die rohrförmigen Abschnitte (12a, 12b) ein Gewinde (16) auf der Oberfläche aufweisen, das sich im Inneren davon befindet.

6. Verteiler (10, 110) nach Anspruch 5, **dadurch gekennzeichnet, dass** jeder der röhrenförmigen Abschnitte (12a, 12b) monolithisch mit dem röhrenförmigen Hauptkörper (11) ist und gebildet ist durch:
- ein im Wesentlichen scheibenförmiges erstes Element (14),
- ein rohrförmiges zweites Element (15), das innen mit dem Gewinde (16) versehen ist,
wobei das erste Element (14) Folgendes aufweist:
- einen Außenumfang (17), der im Wesentlichen gleich dem Umfang des Querschnitts des rohrförmigen Hauptkörpers (11) ist
- einen Innenumfang (18), der im Wesentlichen gleich dem Umfang des Querschnitts des zweiten Elements (15) ist.

7. Verteiler (10, 110) nach Anspruch 6, **dadurch gekennzeichnet, dass** das erste Element (14) geschweißt ist:
- an ein Ende des rohrförmigen Hauptkörpers (11), im Wesentlichen am Außenumfang (17),
- an ein Ende des zweiten Elements (15), im Wesentlichen am Innenumfang (18).

8. Verteiler (10, 110) nach Anspruch 6 oder 7, **dadurch gekennzeichnet, dass** das zweite Element (15) innen, zwischen dem mit dem ersten Element (14) verschweißten Ende und dem Gewinde (16), mit einem ersten Sitz (19) zur Aufnahme eines Dichtungselements versehen ist.

9. Verteiler (10) nach einem oder mehreren der vorhergehenden Ansprüche, **dadurch gekennzeichnet, dass** er mit einem geformten Abschnitt (21) an der Wand des rohrförmigen Hauptkörpers (11) in einem Abschnitt versehen ist, der demjenigen gegenüberliegt, in dem das mindestens eine Loch (13) angeordnet ist, wenn man die Erstreckungsachse (Y) des mindestens einen Lochs (13) betrachtet.

10. Verteiler (210) nach einem oder mehreren der vorhergehenden Ansprüche, **dadurch gekennzeichnet, dass** die röhrenförmigen Abschnitte (212a, 212b) teilweise in den röhrenförmigen Hauptkörper (211) eingesetzt sind, aber aus ihm herausragen, wobei die röhrenförmigen Abschnitte (212a, 212b) ein Gewinde (216) auf der Oberfläche aufweisen, die sich innen befindet.

11. Verteiler (210) nach einem oder mehreren der vorhergehenden Ansprüche, **dadurch gekennzeichnet, dass** die rohrförmigen Abschnitte (212a, 212b) aus Kunststoff hergestellt sind und mit dem rohrförmigen Hauptkörper (211) durch gegenseitige Verriegelungsmittel (222) verbunden sind.

12. Verteiler (210) nach Anspruch 11, **dadurch gekennzeichnet, dass** die Mittel zur gegenseitigen Verriegelung (222) Folgendes umfassen:
- Laschen (223) des rohrförmigen Hauptkörpers (211), die in der Nähe eines entsprechenden Endes des letzteren und im Wesentlichen in gleichem Abstand entlang des Umfangs eines Querschnitts des rohrförmigen Hauptkörpers (211) angeordnet sind,
- einen oder mehrere Bereiche (224) eines entsprechenden der röhrenförmigen Abschnitte (212a, 212b) zum Anstoßen/Einwirken auf eine oder mehrere entsprechende Laschen (223).

13. Elektrische Pumpe, **dadurch gekennzeichnet, dass** sie einen Verteiler (10, 110, 210) nach einem oder mehreren der Ansprüche 1 bis 12 umfasst.

## Revendications

1. Collecteur (10, 110, 210) pour le raccordement d'un ensemble de pompage électrique, comprenant:
- un corps principal tubulaire (11, 211), ledit corps principal tubulaire (11, 211) comportant au moins un trou (13, 113) dont l'axe d'extension (Y) est perpendiculaire à l'axe d'extension (X) dudit corps principal tubulaire (11, 211),
- deux parties tubulaires (12a, 12b, 212a, 212b) disposées aux extrémités longitudinales dudit corps principal tubulaire (11, 211) et coaxiales avec celui-ci, dans lequel ledit corps principal tubulaire (11, 211) a une paroi d'une épaisseur de l'ordre de 1 mm, **caractérisé en ce que** ledit au moins un trou (13, 113) comporte un second siège (20) destiné à recevoir un élément d'étanchéité, qui est obtenu en tirant le bord dudit au moins un trou (13, 113) vers l'intérieur dudit corps principal tubulaire (11).

2. Collecteur (10, 110, 210) selon la revendication précédente, **caractérisé par le fait que** ledit corps principal tubulaire (11, 211) est réalisé par soudage sur le corps principal d'une tôle préalablement calandrée.

3. Collecteur (10, 110, 210) selon l'une ou plusieurs des revendications précédentes, **caractérisé en ce que** ledit corps principal tubulaire (11, 211) a un diamètre intérieur de l'ordre de 10 cm et lesdites portions tubulaires (12a, 12b, 212a, 212b) ont un diamètre intérieur de l'ordre de 5 cm.

4. Collecteur (10, 110) selon l'une ou plusieurs des revendications précédentes, **caractérisé en ce que** lesdites portions tubulaires (12a, 12b) sont sensiblement à l'intérieur dudit corps principal tubulaire (11).

5. Collecteur (10, 110) selon l'une ou plusieurs des revendications précédentes, **caractérisé en ce que** lesdites parties tubulaires (12a, 12b) ont un filetage (16) sur la surface qui leur est interne.

6. Collecteur (10, 110) selon la revendication 5, **caractérisé en ce que** chacune desdites portions tubulaires (12a, 12b) est monolithique avec ledit corps principal tubulaire (11) et est constituée par:
- un premier élément (14) sensiblement en forme de disque,
- un second élément tubulaire (15), pourvu intérieurement d'un filetage (16),
ledit premier élément (14) ayant:
- une circonférence externe (17) qui est sensiblement égale à la circonférence de la section transversale dudit corps principal tubulaire (11),
- une circonférence interne (18) qui est sensiblement égale à la circonférence de la section transversale dudit second élément (15).

7. Collecteur (10, 110) selon la revendication 6, **caractérisé en ce que** ledit premier élément (14) est soudé:
- à une extrémité dudit corps principal tubulaire (11), sensiblement au niveau de ladite circonférence externe (17),
- à une extrémité dudit second élément (15), sensiblement au niveau de ladite circonférence interne (18).

8. Collecteur (10, 110) selon la revendication 6 ou 7, **caractérisé en ce que** ledit second élément (15) est pourvu intérieurement, entre l'extrémité soudée audit premier élément (14) et ledit filetage (16), d'un premier siège (19) pour le logement d'un élément d'étanchéité.

9. Collecteur (10) selon l'une ou plusieurs des revendications précédentes, **caractérisé en ce qu'**il est pourvu d'une partie façonnée (21) sur la paroi dudit corps principal tubulaire (11) dans une partie opposée à celle dans laquelle est disposé ledit au moins un trou (13), compte tenu dudit axe (Y) d'extension dudit au moins un trou (13).

10. Collecteur (210) selon l'une ou plusieurs des revendications précédentes, **caractérisé en ce que** lesdites parties tubulaires (212a, 212b) sont partiellement insérées dans ledit corps principal tubulaire (211), mais en font saillie, lesdites parties tubulaires (212a, 212b) ayant un filetage (216) sur la surface qui leur est interne.

11. Collecteur (210) selon l'une ou plusieurs des revendications précédentes, **caractérisé en ce que** lesdites parties tubulaires (212a, 212b) sont en matière plastique et sont associées audit corps principal tubulaire (211) en vertu de moyens d'emboîtement mutuel (222).

12. Collecteur (210) selon la revendication 11, **caractérisé en ce que** lesdits moyens de verrouillage mutuel (222) comprennent:
- des languettes (223) dudit corps principal tubulaire (211), disposées à proximité d'une extrémité correspondante de ce dernier et sensiblement équidistantes le long de la circonférence d'une section transversale dudit corps principal tubulaire (211),
- une ou plusieurs régions (224) d'une partie tubulaire correspondante (212a, 212b), pour butée/ interférence avec une ou plusieurs languettes correspondantes (223).

13. Pompe électrique, **caractérisée en ce qu'**elle comprend un collecteur (10, 110, 210) selon l'une ou plusieurs des revendications 1 à 12.
